# EUROPEAN PATENT APPLICATION

(11) **EP 2 575 316 A1**
(43) Date of publication of application: **03.04.2013**
(21) Application number: 11250833.8
(22) Date of filing: 30.09.2011
(51) Int. Cl.: H04L 29/06

(54) **Controlled access**

(71) Applicant: British Telecommunications Public Limited Company, London EC1A 7AJ (GB)
(72) Inventor: The designation of the inventor has not yet been filed
(74) Representative: Lau, Chi-Fai

(57) **Abstract**

User access to a protected resource is controlled by: intercepting a request from a client application (40) directed to a server (50); obtaining user credentials; processing the user credentials to authenticate the user and sending to an authorization server (70), a HTTP request comprising at least one HTTP header variable indicating authentication of the user. The user credentials are not present in the HTTP request. The authorization server (70) is arranged to issue a token, which may be used by the user (20) for indicating to a server (50) hosting the protected resource authorization of the user to access the protected resource.

## Description

The invention relates to controlling access by a client acting on behalf of a user to a protected resource hosted on a server.

Current token-based access control systems have advantages but lack a capability for single website login for multiple sites with central control of operation. There is a need for an improved and more secure system for granting controlled access to protected resources. The invention addresses at least some of the above problems.

A method is proposed for controlling user access to a protected resource, in which the method comprises: intercepting a request from a client application directed to a server; obtaining user credentials; processing the user credentials to authenticate the user and sending to a server configured to issue a token for indicating to a server hosting the protected resource, authorization of the user to access the protected resource, a HTTP request comprising at least one HTTP header variable indicating authentication of the user; in which the user credentials are not present in the HTTP request.

The method of may further comprise receiving in response to the HTTP request, a token and sending the received token to the client application.

### Brief Description of the Drawings

In order to aid understanding, embodiments of the invention will now be described by way of example with reference to the drawings in which:
Figure 1 shows a schematic of a network according to aspects of the present invention;
Figures 2 shows a diagram of message flows according to an aspect of the present invention;
Figure 3 shows a user prompt according to an aspect of the present invention;
Figure 4 shows a schematic of a server or client suitable for implementation of the present invention.

### Detailed Description of Embodiments of the Invention

The invention relates to controlling access by a client acting on behalf of a user to a protected resource.

According to the invention, authentication is provided by a centralised cookie-based access control method, such as Computer Associates SiteMinder and authorization is handled separately in a token-based method, such as oAuth, resulting in issue of a token granting access to the protected resource. The cookie-based access control method and the token based access control systems are designed to work independently, with each being based on a different client interface. The present invention combines aspects of each access control method to provide an improved and more secure system for granting controlled access to protected resources to users who are connecting to a server hosting the resource by means of an application rather than using a browser.

We now describe embodiments of the invention.

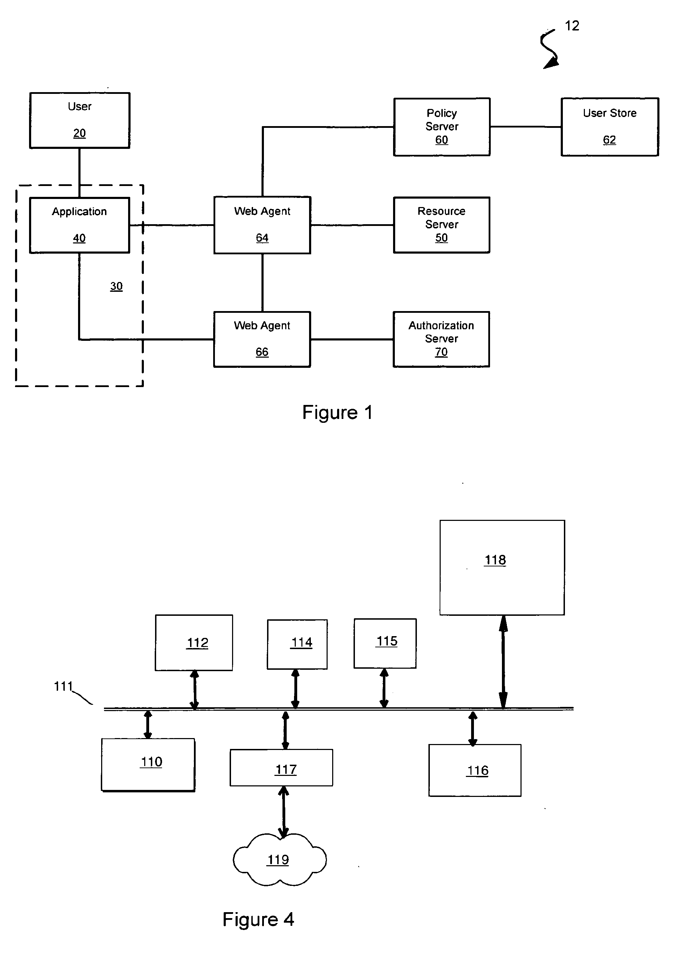

Figure 1 shows the main components of a network 12 for implementing the present invention according to a first embodiment. User 20, who will normally be the resource owner, communicates with the various servers in the network via client 30. Client 30 may be any suitable networked user device running an application 40 for handling communication with the rest of network 12 on behalf of the user 20. In particular, client 30 may be a mobile device such as a personal digital assistant (PDA), mobile phone or tablet device and application 40 may be a mobile application designed to run under a mobile operating system (such as iOS, Android, BlackBerry, Symbian, Windows Phone, etc), in the environment provided by a mobile device: typically low storage and processing capabilities, low-power and a restricted user interface.

The user 20 will mainly be interested in communication with resource server 50. Resource server 50 hosts content that the user wants to access from client 30. At least some of the content hosted on resource server 50 will be protected, i.e. access to this content is controlled to restrict access to authorized users. In order to access protected content, user 20 must be authenticated by the network to establish their identity. User 20 must also be authorized by the network to establish what content the authenticated identity associated with the user is allowed to access.

Centralised, cookie-based authentication and authorization for network 12 is implemented by policy server 60, policy store 62 and web agents 64, 66 in combination with token-based access control implemented by authorization server 70 and resource server 50. The provision of access to protected resources hosted on resource server 50 and the authentication and authorization used to control access according to various aspects of the invention will now be described in detail.

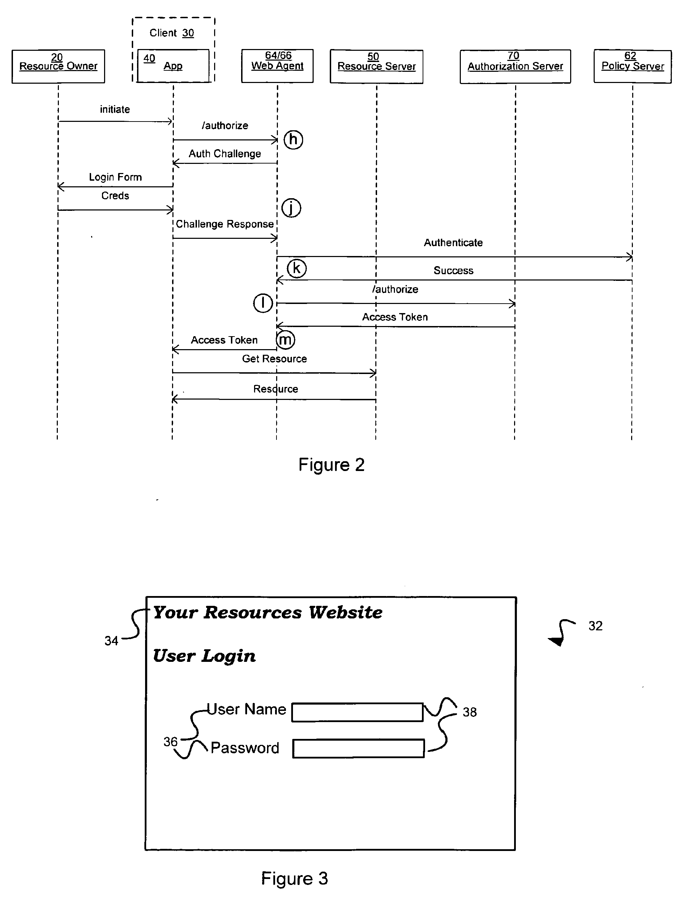

Figure 2 shows messages exchanged between the elements of network 12 according to a first aspect of the invention. As shown in Figure 2, when user 20 wants to access a resource, user 20 initiates an access request by interacting with application 40 running on client 30. Application 40 is designed to handle such requests and sends an access request message of type "authorize" (which may, for example, take the form http://api.bt.com/oauth/authorize) to resource server 50 hosting the requested resource. Web agent 64 (e.g. a SiteMinder web agent) which may be embedded on resource server 50, intercepts (h) the access request from application 40. Web agent 64 recognizes the "authorize" type of request and determines that the access request requires authentication and authorization. Web agent 64 issues (j) an authorization challenge back to application 40. Application 40 is trusted with the user credentials. On receipt of the challenge, application 40 prompts the user by displaying a login form to user 20. A suitable form is shown at 32 in Figure 3, identifying at 34 the web site that provides access to the desired resources and providing prompts 36 and text boxes 38 for the user to type their credentials. In response to display on client 30 of the login form, user 20 enters their credentials, typically a username specific to the user and a password, which are forwarded by application 40 to web agent 64. Web agent 64, copies (k) the credentials to policy server 60. Policy server 60 may check with user store 62 (which may be embodied as a LDAP server - not shown) for policies and rules appropriate to the current user and the access request.

Policy server 60 checks the user's credentials against the relevant policy and rules and (in the case where the credentials are accepted) returns a Success message to web agent 64. On receipt of the Success message, web agent 66 now forwards (I) to authorization server 70 the access request message of type "authorize", originally received from application 40, to which is added variables (for example, Siteminder SMSESSION cookie) provided by web agent 64 on receipt of the Success message from policy server 60. Authorization server 70 verifies that the access request message is valid with reference to the variables inserted by web agent 64 and, according to a further aspect of the invention may additionally check other variables provided in the original request by application 40. When satisfied that the access request is correct, authorization server 70 then issues an access token. The access token is forwarded (m) by web agent 66 to application 40. Application 40 now generates a new Get Resource request (comprising the token issued by authorization server 70) for access to the protected resource and sends it to resource server 50. This request is intercepted by web agent 64, which does not recognize it as requiring checking and so passes it to resource server 50. Upon receiving the access request with a valid token, resource server 50 sends the requested resource to application 40, so making it available to user 20.

A typical architecture for a server, client or other form of computer apparatus on which software implementing the invention can be run, is shown in Figure 4. Each computer apparatus comprises a processor 110 for executing computer program instructions and managing and controlling the operation of the computer apparatus. Processor 110 is connected to via a bus 111 to a variety of devices including solidstate memory devices including non-volatile storage 114 and volatile storage 115. Further non-volatile storage 112 may comprise one or more magnetic or optical disc drives and may comprise removable, non-volatile storage means such as removable magnetic or optical media (for example re-writable or recordable DVDs) or non-volatile memory cards.

The computer apparatus further includes one or more network interfaces 117 for interfacing to and exchanging data via one or more networks 119 such as an IP network underpinning the various connections shown in Figure 1. The network interface(s) may be a local area network (LAN) adaptor connecting to a LAN. The LAN may itself be connected to other LANs and wide area networks (WANs) to enable the apparatus to communicate with and exchange data with other computer apparatuses. Alternatively, the network interface may be a DSL modem, or similar, that provides a connection to a WAN, such as the internet or an intranet, which enables communications with further networks. In the case of the client, network interfaces 117 will include a wireless interface according to one or more of GSM, GPRS, Wi-Fi, WiMax, etc.

The computer apparatus can also, optionally, include user input/output devices such as a pointer device/keyboard 116 as well as a visual display 118. The computer apparatus is powered by power supply unit (not shown), typically obtaining power from an external power grid or internal battery (not shown). The skilled person will understand that this architecture is not limiting, but is merely an example of typical computer apparatus architecture. The computer apparatus may also be a distributed system, comprising a number of computer apparatuses communicating through respective interface ports 117 such that a user may access program and other data stored on a remote computer apparatus.

Non-volatile data storage means 112, 114 comprises an operating system and one or more application programs. The operating system comprises the software that the computing apparatus requires to operate, communicate with other computer apparatuses, receive input from users, display outputs and results to users, etc. Non volatile data storage means 112, 114 may comprise applications and other computer code which can be executed in order to perform a method according to the present invention, for example such as the one described above and illustrated in the drawings. It will be understood that computer code may comprise a single integrated application or a number of different modules that are accessed separately to execute a method according to the present invention. Each module may perform the functionality of one or more of the processes, which comprise the present invention.

The above embodiments are to be understood as illustrative examples of the invention. Further embodiments of the invention are envisaged and will be evident to the skilled reader. It is to be understood that any feature described in relation to any one embodiment may be used alone, or in combination with other features described, and may also be used in combination with one or more features of another of the embodiments, or any combination of the embodiments. Furthermore, equivalents and modifications not described above will be evident to the skilled reader and may also be employed without departing from the scope of the invention, which is defined in the accompanying claims.

As will be understood by those skilled in the art, the invention may be implemented in computer program product software, any or all of which may be contained on various storage media so that the program can be loaded onto one or more general purpose computers or downloaded over a computer network using a suitable transmission medium. The computer program product used to implement the invention may be embodied on any suitable carrier, readable by a suitable computer input device, such as optically readable media and magnetic media.

## Claims

1. A method for controlling user access to a protected resource, in which the method comprises:
(a) intercepting a request from a client application directed to a server;
(b) obtaining user credentials;
(c) processing the user credentials to authenticate the user; and
(d) sending to a server configured to issue a token for indicating to a server hosting the protected resource, authorization of the user to access the protected resource, a HTTP request comprising at least one HTTP header variable indicating authentication of the user; in which the user credentials are not present in the HTTP request.

2. The method of claim 1 comprising:
(e) receiving in response to the HTTP request, a token and sending the received token to the client application.

3. The method of any of claims 1 to 2, in which the at least one HTTP header variable is generated as part of a session between a browser running on a client and a web agent.

4. A tangible computer readable medium having stored thereon, computer executable instructions that, if executed by a computing device, cause the computing device to perform a method comprising: intercepting a request from a client application directed to a server; obtaining user credentials; processing the user credentials to authenticate the user; and sending to a server configured to issue a token for indicating to a server hosting the protected resource, authorization of the user to access the protected resource, a HTTP request comprising at least one HTTP header variable indicating authentication of the user; in which the user credentials are not present in the HTTP request.
